**Europäisches Patentamt**

**European Patent Office**

**Office européen des brevets**

(19)

(11) Veröffentlichungsnummer : **0 043 105**
**B1**

(12)

# EUROPÄISCHE PATENTSCHRIFT

(45) Veröffentlichungstag der Patentschrift :
**05.03.86**

(21) Anmeldenummer : **81104907.1**

(22) Anmeldetag : **25.06.81**

(51) Int. Cl.⁴ : **B 25 J    3/04, F 15 B 13/14**

(54) **Lastdruckrückmeldesystem mit wenigstens einem Steuerventil zur Steuerung einer Vorrichtung.**

(30) Priorität : **28.06.80 DE 3024402**

(43) Veröffentlichungstag der Anmeldung :
**06.01.82 Patentblatt 82/01**

(45) Bekanntmachung des Hinweises auf die Patenterteilung : **05.03.86 Patentblatt 86/10**

(84) Benannte Vertragsstaaten :
**DE FR GB SE**

(56) Entgegenhaltungen :
**DE-A- 2 107 676**
**DE-C- 1 082 718**
**FR-A- 2 158 124**
**FR-A- 2 348 020**
**GB-A- 1 106 472**
**US-A- 3 123 230**
**US-A- 3 241 687**
**US-A- 3 637 092**
**US-A- 3 712 180**

(73) Patentinhaber : **Alb. Klein GmbH & Co. KG**

**D-5241 Niederfischbach (DE)**

(72) Erfinder : **Stolpp, Siegfried, Ing. grad.**
**Rothenbergstrasse 55**
**D-5241 Niederfischbach (DE)**

(74) Vertreter : **Hiebsch, Gerhard F., Dipl.-Ing.**
**Erzbergerstrasse 5A Postfach 464**
**D-7700 Singen 1 (DE)**

## Beschreibung

Die Erfindung betrifft ein Ventil nach dem Oberbegriff des Anspruchs 1, das zum Stande der Technik gehört.

Ein derartiges Ventil ist für eine Lastdruckrückmeldung ungeeignet, weshalb der Erfindung die Aufgabe zugrunde liegt, das vorbekannte Ventil so auszubauen, daß mit ihm eine steuerbare Lastdruckrückmeldung möglich ist.

Zur Lösung dieser Aufgabe führt ein Ventil, das zur Lastdruckrückmeldung einen hydraulischen Vorsteuerteil aufweist mit zwischen einem Eingang des an Meßstellen der Vorrichtung herrschende Primärdrucks einerseits sowie einem Ausgang für Sekundärdruck anderseits angeordneten Drosselblende und einer Einschraubblende als hydraulischem Widerstand mit nachgeordneter hydraulischer Kammer, wobei in die hydraulische Kammer ein Ende eines — mit dem zwei Steuerkanten aufweisenden Regelkolben koaxial vorgesehenen — Kolbens einragt, der Regelkolben andernends dem Ausgang für den Sekundärdruck zugeordnet ist und die beiden Kolben sich berühren.

Bei dem erfindungsgemäßen hydraulischen Vorsteuerventil ist durch die Öffnungsquerschnitte der — bevorzugt in ihrem Querschnitt veränderbaren — Drosselblende oder einer Einschraubblende die Höhe der Steuerdrücke bestimmt. Der beschriebene Kolben des Lastdruckregelventils wird von den Ausgangsdrücken beaufschlagt und wirkt mit dem Regelkolben zusammen, an dessen anderem Ende der Sekundärdruck angreift.

Zur Begrenzung der maximalen Auslenkung von Regelkolben und dem daran anliegenden Kolben sind erfindungsgemäß Anschläge vorhanden, wobei zudem diese Kolben unter Federbelastung stehen können.

Bei zunehmendem Primärdruck ist der Regelkolben aus einer Gleichgewichtslage zum Sekundärdruck hin verschiebbar und dabei durch das Verhältnis der Querschnitte von Drosselblende und Einschraubblende ein Steuerdruck eingestellt.

Bei einem mit dem erfindungsgemäßen, den Lastdruck regelnden Ventil versehenen Manipulator können die Ist-Wert-Geber an den Gelenken bzw. Drehlagern des Meisterarms mit Sollwertgebern der entsprechenden Gelenke bzw. Drehlager des Lastarmes durch eine elektrohydraulische Lageregelung verbunden sein. Dabei hat es sich als günstig erwiesen, zumindest eine Bewegung des Meisterarmes — bzw. des Geberorgans der Vorrichtung — mit mechanischen Mitteln zu regeln und parallel dazu das Last-Kraft-Rückmeldungs-System anzubringen.

Der Vergleich der Sollwertspannungen mit den Istwertspannungen führt zu Differenzspannungen, welche eine Auslenkung der Servoventile und damit der entsprechenden Ausleger bewirken. Sobald die Istwertspannung der Sollwertspannung entspricht und damit das Differenzsignal verschwindet, ist die vorgegebene Lage erreicht die Ausleger bleiben stehen. Demgegenüber wird die Auslenkung der Drehbewegung direkt mechanisch durch ein Kopierventil oder ein entsprechendes Organ vom Meisterarm abgenommen und die Geschwindigkeit durch die Größe eines Auslenkwinkels bestimmt im Bezug auf eine von Kraftspeichern erzwungene Mittelstellung.

Der Sockelteil des Meisterarms lagert drehbar auf einer Achse, die über einen Miniaturschwenkzylinder oder ein entsprechendes Organ sowie das Lastdruckregelventil zur Lastdruckrückmeldung mit dem Hydrogetriebemotor des Lastarmes verbunden ist. Dabei können die auf dem Sockel des Geberorgans oder des Meisterarms vorgesehenen Miniaturzylinder od. dgl. ebenfalls über ein erfindungsgemäßes Ventil zur Lastdruckregelung sowie ein Servoventil mit einem Hydraulikzylinder des Lastarmes oder Nehmerorgans verbunden sein.

Zwischen den Armteilen des Meisterarms oder Geberorgans ist ein Spreizzylinder über ein Ventil zur Lastdruckregelung und ein Servoventil an einen entsprechenden Spreizzylinder des Lastarmes oder Nehmerorgans angeschlossen.

Die erfindungsgemäße Ausbildung des Ventils wird in der nachfolgenden Beschreibung zur Zeichnung näher erläutert. Weitere Vorteile und Einzelheiten der Erfindung ergeben sich aus der nachfolgenden Beschreibung in der Zeichnung wiedergegebener bevorzugter Ausführungsbeispiele. Es zeigt :

Figur 1 die schematisierte Seitenansicht des Meisterarmes eines sog. Manipulators ;

Figur 2 die der Fig. 1 entsprechende Ansicht des Lastarmes des Manipulators mit einem angedeuteten — Ventile zur Lastdruckregelung enthaltenden — elektrohydraulischen Lageregelungssystem und einem in Draufsicht dargestellten Hydrogetriebemotor ;

Figur 3 die teilweise geschnittene Seitenansicht des Ventils zur Lastdruckregelung ;

Figur 4 ein weiteres Ausführungsbeispiel des Ventils im Längsschnitt.

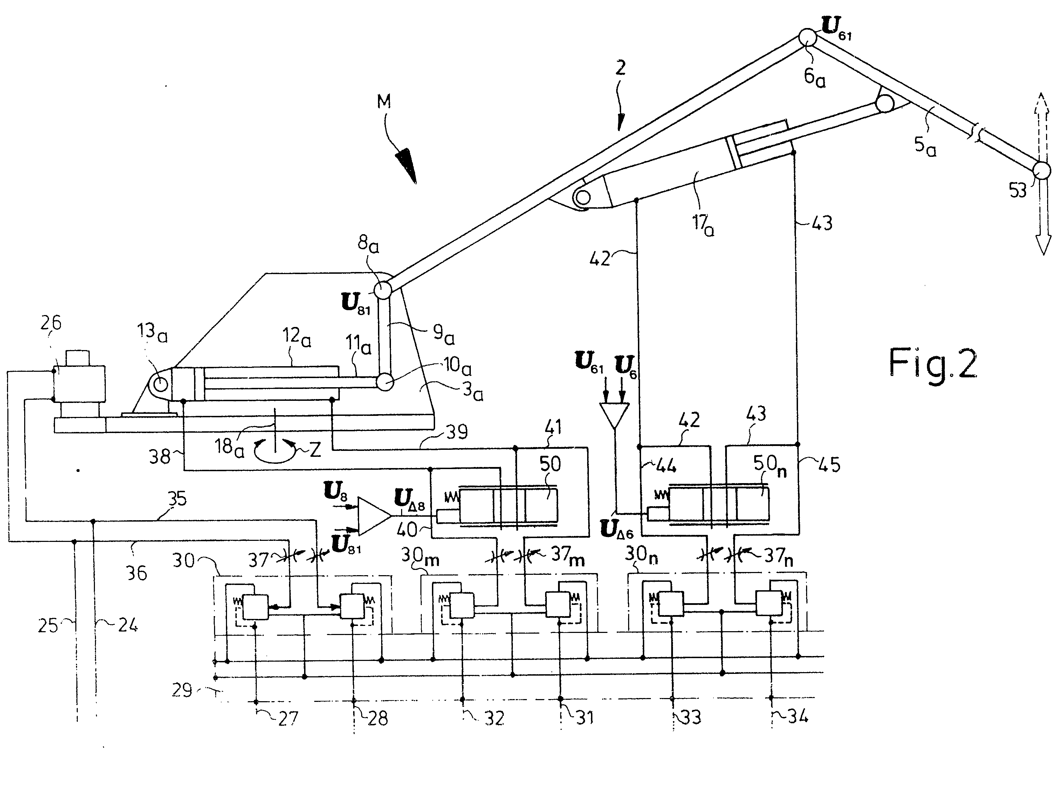

Ein Manipulator M weist einen Meisterarm 1 auf, der einen mit ihm über eine elektro-hydraulische Lageregelung verbundenen Lastarm 2 nach Fig. 2 steuert ; der Meisterarm 1 ist im wesentlichen eine verkleinerte Nachbildung des Lastarmes 2.

Von einem Sockel 3 des Meisterarmes 1 ragt ein Modell-Oberarm 4 mit Modell-Unterarm 5 ab, die miteinander durch ein (Ellenbogen-) Gelenk 6 verbunden sind. Am freien Ende des Modell-Oberarmes 5 sitzt ein (Hand-) Gelenk 7 für einen Steuergriff $7_g$.

Das andere Ende des Modell-Oberarmes 4 ist an einer Achse 8 festgelegt und zudem starr mit einem Hebelarm 9 verbunden, der bei 10 an einen Kolben 11 angelenkt ist ; dieser ist mit einem Miniaturzylinder 12 verbunden, welcher seinerseits bei 13 gelenkig am Sockel 3 lagert.

Zwischen Sockel 3 und Modell-Oberarm 4 sowie zwischen letzterem und dem Modell-Unterarm 5 sind jeweils Rückholfedern 14 bzw. 16 vorgesehen, außerdem ist zwischen Oberarm 4 und Unterarm 5 ein Spreiz-Zylinder 17 beidseits angelenkt.

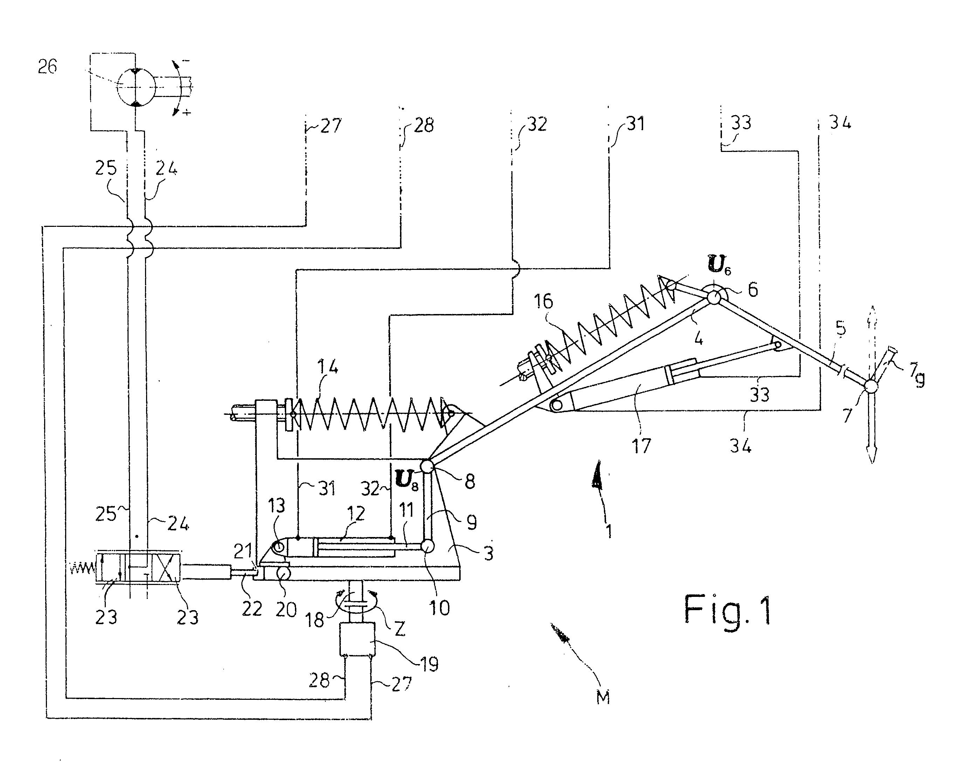

Der Sockel 3 sitzt auf der Kolbenachse 18 eines Schwenkzylinders 19 und ist in Pfeilrichtung z in einem Winkel von ± 10° schwenkbar ; beidseits horizontal angreifende Zentrierfedern 20 halten den Sockel 3 — und damit den gesamten Meisterarm 1 — in einer Mittelstellung. Eine schräge Stirnfläche 21 des Sockels 3 steht als Steuerkurve in Berührung mit einem Rollenstößel 22 eines mechanischen Kopierventils 23, das über Leitungen 24, 25 an einen gemäß dem Pfeil in Fig. 1 drehenden Hydrogetriebemotor 26 angeschlossen ist.

Vom Schwenkzylinder 19 führen Leitungen 27, 28 unter Zwischenschaltung einer Reihenplatte 29 zu einem Ventil 30 für die Lastdruckrückmeldung.

Ebenso sind einerseits der Miniaturzylinder 12 durch Leitungen 31, 32 und anderseits der zwischen dem Oberarm 4 und Unterarm 5 vorhandene Spreizzylinder 17 durch Leitungen 33, 34 mit anderen gleichartigen Ventilen $30_m$ bzw. $30_n$ verbunden.

Das erstgenannte Ventil 30 ist durch Leitungen 35, 36 an den Hydrogetriebemotor 26 angeschlossen. In diese Leitungen 35, 36 sind einstellbare Drosselblenden 37 eingefügt, wie sie auch den anderen Ventilen $30_m$ bzw. $30_n$ zugeordnet sind — und zwar jeweils in Verbindungsleitungen 38, 39 bzw. 40, 41 zu einem Hydraulikzylinder $12_a$ bzw. einem Spreizzylinder $17_a$ am Lastarm 2. Soweit dessen einzelne Teile jenen des Meisterarmes 1 entsprechen, sind sie mit dem jeweiligen Bezugszeichen der Fig. 1 kenntlich gemacht unter Hinzuziehung eines Index « a » (3a ; 4a ; 5a ; 6a ; 8a ; 9a ; 10a ; 11a ; 12a ; 13a ; 17a ; 18a).

Von den Verbindungs-Leitungen 38, 39 zwischen dem Hydraulikzylinder $12_a$ des Lastarmes 2 und einem Servoventil 50 werden die Lastdrücke über Steuerleitungen 40, 41 abgezweigt und dem Ventil $30_m$ zugeführt. Dies trifft entsprechend auf Leitungen 42, 43 zwischen Spreizzylinder $17_a$ und einem ihm zugeordneten Servoventil $50_n$ mit Steuerleitungen 44, 45 zu.

Ventile 30, $30_m$, $30_n$ sind auf einer gemeinsamen Reihenplatte bzw. einem Steuerblock 29 zusammengefaßt.

Zur Steuerung des Manipulators werden die Sollwertspannungen $U_6$ und $U_8$ an den Gelenkstellen 6 und 8 des Meisterarmes 2 mit Istwertspannungen $U_{61}$ und $U_{81}$ an den entsprechenden Gelenkstellen $6_a$ und $8_a$ des Lastarmes 2 verglichen und die Differenzspannungen $U_\triangle 6$ und $U_\triangle 8$ ermittelt, welche eine Auslenkung der Servoventile 50 und damit der Ausleger $4_a$, $5_a$ bewirken. Sobald die Istwertspannung der Sollwertspannung entspricht und damit das Differenzsignal auf 0 steht, ist die vom Meisterarm 1 vorgegebene Lage erreicht und die

Ausleger $4_a$ und $5_a$ des Lastarmes 2 bleiben stehen.

Bei der Drehbewegung wird die Auslenkung des Kopierventiles 23 direkt mechanisch vorgenommen. Dabei wird die Schwenkrichtung des Manipulators M durch die Bewegung des Steuergriffes $7_g$ nach rechts oder links (+ oder −) und die Geschwindigkeit durch die Größe des Auslenkwinkels Z vorgegeben. Die Mittelstellung wird — wie beschrieben — durch die Zentrierfedern 20 am Sockel 3 gewährleistet.

Parallel zu der geschilderten Lageregelung ist ein Lasten/Kraft-Rückmeldesystem wirksam, welches die Druckverhältnisse in den Arbeitszylindern $12_a$, $17_a$ bzw. dem Hydrogetriebemotor 26 auf die dazugehörigen Stellglieder 12 (Miniaturzylinder), 17 (Spreizzylinder) und 19 (Schwenkzylinder) überträgt.

Die Lastdrücke werden über die einstellbaren Drosselblenden 37, $37_m$, $37_n$ auf die Ventile 30, $30_m$ oder $30_n$ gegeben ; diese regeln die Ausgangsdrücke proportional zum entsprechenden Eingangsdruck.

Die maximalen Druckhöhen der Ausgangsdrücke können unabhängig voneinander durch Verstellen der Drosselblenden 37, $37_m$, $37_n$ eingestellt werden, wodurch es möglich wird, die Rückmeldekraft auf den Steuergriff $7_g$ einzustellen.

Geht man davon aus, daß die Ausgangsdrücke so eingestellt sind, daß der Meisterarm 1 ohne Last kräftemäßig ausgeglichen ist, so bewirken eine Last am Lastende 53 des Lastarmes 2 oder ein der Bewegung des Lastarmes 2 im Wege befindliches Hindernis eine sinngemäße Gegenkraft. Dies gilt natürlich auch für die Beschleunigungs- bzw. Verzögerungskräfte.

Die einstellbaren Rückholfedern 14, 16 verhindern beim Abschalten des Systemdruckes ein Absinken des Meisterarmes 1.

Die Ventile 30, $30_m$ bzw. $30_n$ dienen dazu, eine Last- bzw. Kraftrückmeldung der gewünschten Bewegungen ohne technisch aufwendige elektronische Druckregelkreise zu erreichen ; sie regeln die Drücke in den entsprechenden Stellgliedern des Meisterarmes 1 proportional zu den herrschenden Lastdrücken der Stellglieder direkt hydraulisch.

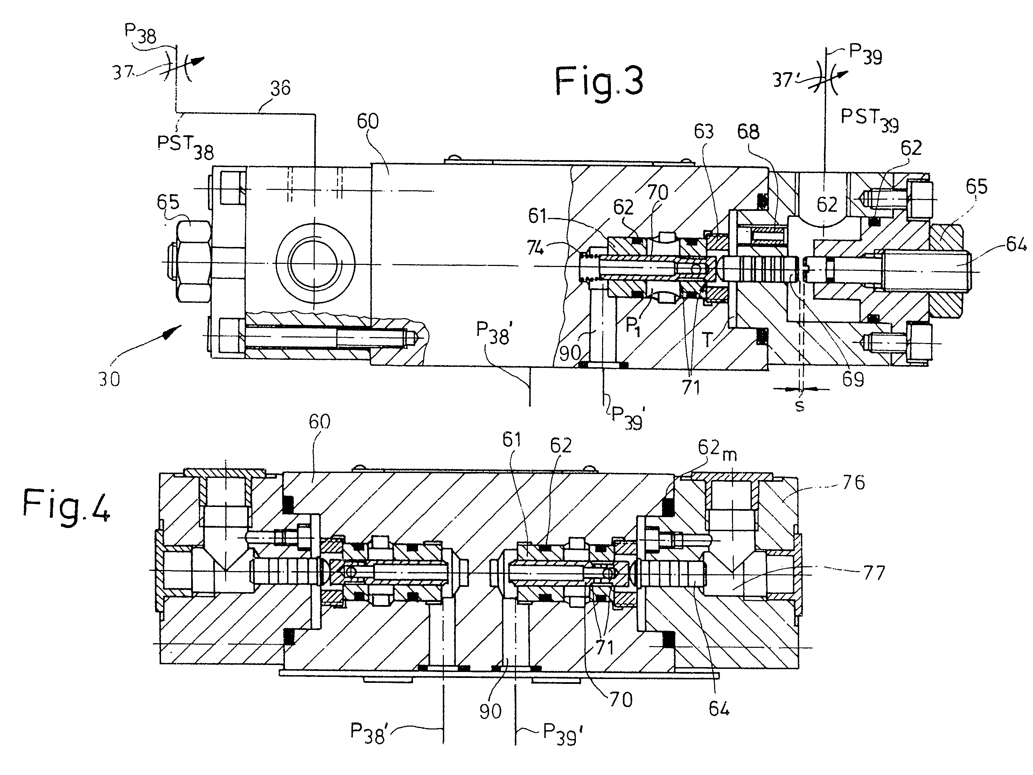

Im folgenden wird anhand der Fig. 3 das Ventil 30 zur Lastdruckrückmeldung beschrieben.

In einem Gehäuse 60 ist in dem geschnittenen rechten Teil des Ventils 30 eine Steuerhülse 61 mit O-Ringen 62 als Dichtung zu erkennen sowie anschließend eine Befestigungsmutter 63. In deren Innenraum ragt ein Anschlag 64 der ebenfalls durch O-Ringe 62 abgedichtet und mit einer Außenmutter 65 versehen ist. Der verdeckte linke Teil des Ventils 30 ist spiegelbildlich aufgebaut. Für ihre Funktion gilt entsprechend das zum rechten Teil Gesagte.

Der an den jeweiligen Stellgliedern (Hydraulik-Zylinder, Hydrogetriebemotor usw.) des Manipulators M herrschende Lastdruck $P_{38}$ bzw. $P_{39}$ liegt am Eingang der einstellbaren Drosselblende 37 bzw. 37′ an. Die Steuerdrücke PST 38 bzw.

PST 39 ergeben sich aus dem Verhältnis der Öffnungsquerschnitte jener Drosselblenden 37 bzw. 37' und von Einschraubblenden 68, von denen eine im rechten Teil der Fig. 4 zu sehen ist.

Der Steuerdruck PST 39 wirkt auf einen Kolben 69, der im Gleichgewicht mit an der gegenüberliegenden Seite durch den Sekundärdruck $P_{39}'$ beaufschlagten Regelkolben 70 ist. In dessen Mittelstellung ist zwischen Kolben 69 und Anschlag 64 ein Spalt der Weite s vorhanden.

Steigt nun beispielsweise aufgrund einer größeren statischen oder dynamischen Last am Lastarm 2 der Lastdruck $P_{39}$ und damit der Steuerdruck PST 39, so ist das Kräftegleichgewicht auf den Regelkolben 70 gestört. Dieser bewegt sich — in Fig. 4 — nach links, eine Steuerkante 71 wird geöffnet und der Sekundärausgangsdruck $P_{39}'$ steigt an. Sobald zwischen Regelkolben 70 und Kolben 69 wieder ein Kräftegleichgewicht herrscht, ist die Verstellung beendet.

Durch Verstellen des Querschnitts der Drosselblende 37' kann der maximale Regelbereich des Steuerdrucks PST 39 und damit des Sekundärausgangsdrucks $P_{39}$ verändert werden. So kann die Kraftwirkung auf den Meisterarm 1 und damit das Last- bzw. Kraftübersetzungsverhältnis zwischen Manipulator M und Meisterarm 1 eingestellt werden.

Die maximale Auslenkung des Regelkolbens 70 kann durch den Anschlag 64 begrenzt und damit eingestellt werden.

Beim Abschalten des Pumpendruckes gewährleisten Federn 74 ein Anliegen des Regelkolbens 70 am Kolben 69 und ein Entlasten des nachgeschalteten Systems.

Beim Ausführungsbeispiel nach Fig. 4 ist der Anschlag 64 jeweils im gesonderten Abschlußdeckel 76 angeordnet, der unter Zwischenschaltung von O-Ringen $62_m$ am Gehäuse 60 sitzt. Die Einstellung des Anschlages 64 geschieht hier durch Druckbeaufschlagung über Druckräume 77.

Der Kolben 69 steht mit seinem dem Regelkolben 70 nahen Ende letzterem in einer hydraulischen Kammer T gegenüber, zwischen welcher sowie einer der Drosselblende 37' nachgeschalteteten Kammer die Einschubblende 68 verläuft. Eine der Steuerkanten 71 von Steuerhülse 61 und Regelkolben 70 ist zwischen der an die Einschraubblende 68 anschließenden Kammer T und dem Ausgang 90 für den Sekundärdruck $P_{39}'$ die andere Steuerkante 71 zwischen letzterem und einer anderen Kammer $P_1$ vorgesehen.

## Patentansprüche

1. Ventil mit wenigstens einem in einer Steuerhülse (61) od. dgl. bewegbaren Regelkolben (70) sowie Steuerkanten (71) und hydraulischen Kammern für eine Vorrichtung mit hydraulisch bewegbaren Teilen, insbesondere für einen Manipulator mit einem Nehmerorgan (Lastarm $2_a$), das

einen an einem Sockelteil drehbar angelenkten Oberarm ($4_a$) und einen daran angelenkten Unterarm ($5_a$) samt Lastaufnahmeende (53) aufweist, sowie einen dem Lastarm ($2_a$) verkleinert gleichgestalteten und handbewegbaren Meisterarm (2) als Geberorgan, wobei die Gelenke bzw. Drehlager von Nehmerorgan (2a) und Geberorgan (2) miteinander steuertechnisch verbunden sind, dadurch gekennzeichnet, daß das Ventil (30) zur Lastdruckrückmeldung einen hydraulischen Vorsteuerteil aufweist mit zwischen einem Eingang des an Meßstellen der Vorrichtung herrschenden Primärdrucks ($P_{38}$ ; $P_{39}$) einerseits sowie einem Ausgang (90) für Sekundärdruck ($P_{38'}$ ; $P_{39'}$) anderseits angeordneter Drosselblende (37 ; 37') und einer Einschraubblende (68) als hydraulischem Widerstand mit nachgeordneter hydraulischer Kammer (T), wobei in die hydraulische Kammer (T) ein Ende eines mit dem zwei Steuerkanten (71) aufweisenden Regelkolben (70) koaxial vorgesehenen Kolbens (69) einragt, der Regelkolben (70) andernends dem Ausgang für den Sekundärdruck ($P_{38'}$, $P_{39'}$) zugeordnet ist und die beiden Kolben (69, 70) sich berühren.

2. Ventil nach Anspruch 1, dadurch gekennzeichnet, daß der Querschnitt der Drosselblende (37 ; 37') veränderbar ist.

3. Ventil nach Anspruch 1 oder 2, gekennzeichnet durch Anschläge (64) zur Begrenzung der maximalen Auslenkung des Regelkolbens (70) und des Kolbens (69).


## Claims

1. A valve comprising at least one operating piston (70) movable in a control bush (61) or the like as well as control edges (71) and hydraulic chambers intended for a device having hydraulically movable parts, especially for a manipulator provided with a slave element (load arm 2a) comprising an upper arm (4a) linked movably with a base part and a lower arm (5a) linked with the upper arm together with a load suspension device at the end (53), and further comprising a master arm (2) as a transmitter similar to the load arm, however scaled down, which can be hand operated, with the links and pivot bearings respectively of slave element (2a) and transmitter (2) being connected with each other control technically, characterized in that, the valve (30) for feeding back a load pressure shows a hydraulic pilot control part provided with a throttle cover (37 ; 37') being arranged between an inlet of the primary pressure ($P_{38}$ ; $P_{39}$) prevailing at measuring points of the device on the one hand and an outlet (90) for a secondary pressure ($P_{38}'$ ; $P_{39}'$) on the other hand and an inserted cover (68) as a hydraulic resistance with a subsequently arranged hydraulic chamber (T), with one end of the piston (69) being arranged coaxially relative to a control piston (70) provided with two control edges (71) extending into the hydraulic chamber (T), the control piston (70) being allocated at the outlet for the secondary pressure

$(P_{38}' ; P_{39}')$ and both pistons (69, 70) being in contact.

2. A valve according to claim 1, characterized in that the cross-section of the throttle cover (37 ; 37') is changeable.

3. A valve according to claim 1 or 2, comprising limit stops for limiting the maximum excursion of control-piston (70) and piston (69).

## Revendications

1. Valve comportant au moins un piston de réglage (70) mobile dans une douille de commande (61) ou autres choses semblables ainsi que des arêtes de commande (71) et des chambres hydrauliques destinées à un dispositif pourvu d'éléments qui peuvent être mus hydrauliquement, destinée notamment à un manipulateur pourvu d'un organe de préhension (bras de puissance 2a) comportant un bras supérieur (4a) articulé de manière tournante et monté sur un socle et un bras inférieur (5a) y articulé ayant à son extrémité une installation de suspension de la charge (53) ainsi qu'un bras de manœuvre (2) comme organe donneur similaire au bras de puissance (2a) mais en format réduit qui peut être mû à main, les joints ou plutôt les coussinets de pivotement de l'organe de préhension (2a) et l'organe donneur (2) étant liés par technique de commande caractérisée en ce que la valve (30) destinée au rétrocouplage pour la pression engendrée par une charge comporte une commande pilote hydraulique pourvue d'un diaphragme d'étranglement (37 ; 37') placé d'une part entre une entrée de la pression d'alimentation $(P_{38} ; P_{39})$ existant aux points de mesure du dispositif et d'autre part une sortie (90) pour la pression secondaire $(P_{38}' ; P_{39}')$ et un diaphragme à vis (68) comme résistance hydraulique avec une chambre hydraulique qui suit (T), une extrémité d'un piston situé coaxialement (69) par rapport au piston de réglage (70) pourvu de deux arêtes de commande (71) entrant dans la chambre hydraulique (T), à l'autre extrémité le piston de réglage (70) étant co-ordonné à la sortie pour la pression secondaire $(P_{38}', 1P_{39}')$ et que les deux pistons (69, 70) se touchent.

2. Valve selon la revendication 1 caractérisée en ce que la section transversale du diaphragme d'étranglement (37 ; 37') peut être changée.

3. Valve selon la revendication 1 ou 2 caractérisée par des butées (64) pour la limitation de l'excursion maximale du piston de réglage (70) et du piston (69).

Fig.1

0 043 105

Fig.2

0 043 105

Fig.3

Fig.4